Europäisches Patentamt

European Patent Office

Office européen des brevets

(19)

(11) Publication number: **0 147 202**
**B1**

# EUROPEAN PATENT SPECIFICATION

(12)

(45) Date of publication of patent specification: **20.04.88**

(21) Application number: **84308993.9**

(22) Date of filing: **20.12.84**

(51) Int. Cl.⁴: **B 60 K 41/02, F 16 D 27/16,
F 16 D 37/02**

(54) **System for controlling the clutch torque of an electromagnetic clutch for a vehicle.**

(30) Priority: **27.12.83 JP 251023/83**

(43) Date of publication of application:
**03.07.85 Bulletin 85/27**

(45) Publication of the grant of the patent:
**20.04.88 Bulletin 88/16**

(84) Designated Contracting States:
**CH DE FR GB IT LI NL**

(56) References cited:
**DE-A-1 157 489
FR-A-1 519 747
FR-A-2 492 023
GB-A- 727 783
JP-A-57 030 624
US-A-3 268 045**

(73) Proprietor: **FUJI JUKOGYO KABUSHIKI KAISHA
7-2 Nishishinjuku 1-chome Shinjuku-ku
Tokyo (JP)**

(72) Inventor: **Sakakiyama, Ryuzo
1-21 Takamatsu Toshima-ku
Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

# Description

The present invention relates to a system for controlling the clutch torque of an electromagnetic clutch disposed between an engine and a transmission of a motor vehicle, and more particularly to such a system which controls the variation of the clutch torque from a high clutch torque while an accelerator pedal is depressed to a low clutch torque on the release of the pedal.

Japanese Patent Publication No. 57—30624 discloses a clutch control system, in which clutch torque is maintained at a value larger than the engine torque by passing a rated current through the clutch coil, as long as the vehicle is driven faster than a predetermined speed, irrespective of the condition of the accelerator pedal. In that system, when the accelerator pedal is released, irregular and abrupt fluctuations occur in engine torque and those fluctuations are transmitted to the driving system, giving an unpleasant shock to the driver. Further, because the level of the rated current needed to be supplied to the clutch at the lower engine speed while the acceleration pedal is released is high, the power of the vehicle battery is rapidly dissipated.

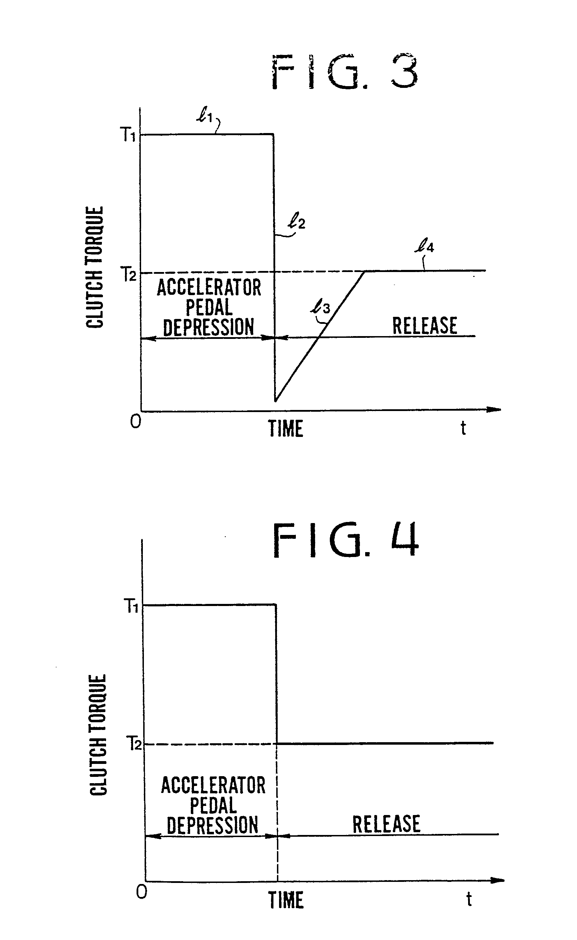

In order to remove those drawbacks, an attempt was made to absorb the torque variations by lowering the clutch torque to a low value $T_2$ as long as engine braking could be effected while the accelerator pedal was released as shown in Figure 4; the clutch torque during the depression of the accelerator pedal was fixed to a higher value $T_1$, the value used in the conventional art. However, by such stepwise variation in clutch torque, the transmission of engine torque fluctuations cannot be adequately prevented.

On the other hand, a dashpot device has been conventionally provided for retarding the closing speed of a throttle valve on release of the accelerator pedal in order to absorb the shock caused by the engine torque change. However, it takes a long time to lower the engine speed to idling speed after the acceleration pedal is released; the result is high fuel consumption and reduction of engine braking force, as well as complication of construction because of the provision of a dashpot.

An object of the present invention is to provide a clutch torque control system for an electromagnetic clutch which system is capable of absorbing shock after the release of the accelerator pedal.

According to the present invention, a system for controlling the clutch torque of an electromagnetic clutch of a vehicle having an accelerator pedal comprises an accelerator switch for producing a given output signal when the accelerator pedal is released, and a first circuit which includes a switching means and which is arranged to control the clutch current passing through a coil of the electromagnetic clutch, wherein the clutch current is lowered if the accelerator pedal is released. The invention is characterised in that a second circuit is responsive to the given output signal of the accelerator switch for controlling the switching means so as to decrease momentarily the clutch current to a low value following release of the accelerator pedal and thereafter to increase the current gradually to a predetermined value.

The switching means is preferably a transistor provided in the circuit of the clutch coil, and the second circuit may comprise a logic gate circuit and a pulse train generating circuit responsive to the given output signal of the accelerator switch for producing a pulse train controlled by the logic gate circuit, the duty ratio of the pulse train gradually varying so as to increase gradually the clutch current.

The invention will be more readily understood by way of example from the following description of a control system in accordance therewith, reference being made to Figures 1 to 3 of the accompanying drawings, in which

Figure 1 is a schematic diagram showing the control system;

Figures 2(a) to (e) are waveforms of the outputs at various parts of Figure 1;

Figure 3 is a graph showing the variation of clutch torque in the system of Figure 1; and

Figure 4 is a graph showing the variation of clutch torque in a known system.

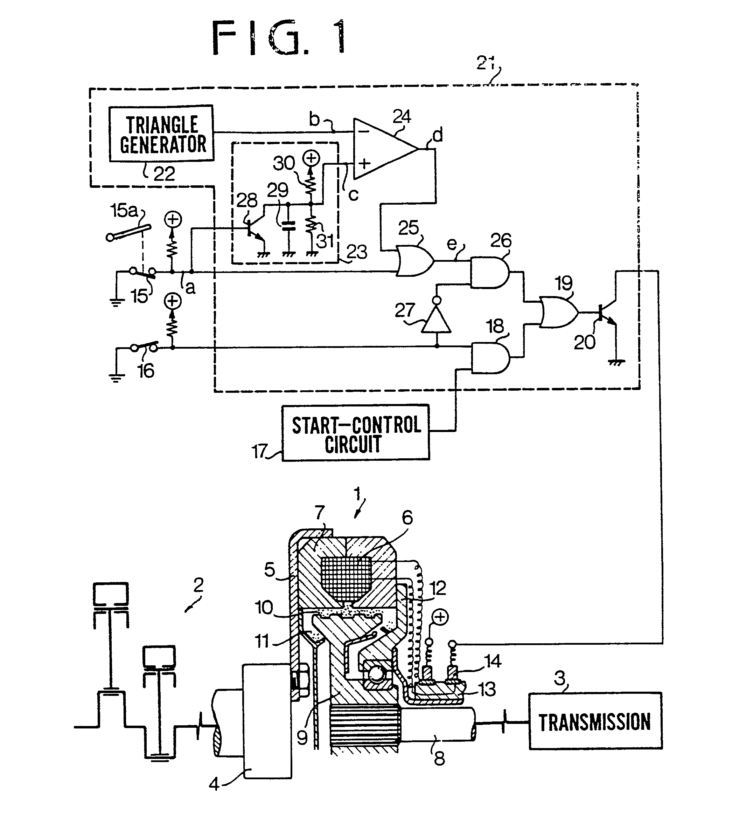

Referring to Figure 1, an electromagnetic powder clutch 1 is interposed between an engine 2 of a vehicle and a transmission 3, which may be a manual gearbox or a belt-drive infinitely variable transmission and transmits the engine torque to the vehicle wheels. The electromagnetic powder clutch 1 comprises a drive member 7 connected to a crankshaft 4 of the engine 2 through a drive plate 5, a coil 6 provided in the drive member 7, a driven member 9 having its outer periphery spaced from the inner periphery of the drive member 7 by a gap 10, and a powder chamber 11 defined between the drive member 7 and driven member 9. The powder chamber 11 is filled with powder of magnetic material. The driven member 9 is secured to an input shaft 8 of the belt-drive infinitely variable transmission 3. A holder 12 secured to the drive member 7 carries slip rings 13 which are electrically connected to the coil 6. The coil 6 is supplied through brushes 14 and slip rings 13 with a clutch current from a control unit 21.

When the magnetizing coil 6 is excited by the clutch current, drive member 7 is magnetized to produce a magnetic flux passing through the driven member 9. The magnetic powder is aggregated in the gap 10 by the magnetic flux and the driven member 9 is engaged with the drive member 7 by the powder. On the other hand, when the clutch current is cut off, the drive and driven members 7 and 9 are disengaged from one another. Where a belt-drive infinitely variable transmission 3 is employed, the transmission ratio is determined in dependence on the engine speed and the vehicle speed. When the vehicle speed is lower than a predetermined low value, the transmission ratio is at the highest ratio. When the engine speed is at high value, the transmission ratio becomes low.

An accelerator pedal switch 15 for detecting the depression of an accelerator pedal is turned off to produce a high level output when the pedal is depressed, and is turned on to produce a low level output when the pedal is released. A vehicle speed switch 16 is turned on to produce a low level output when the vehicle speed exceeds a predetermined level, the output otherwise being at high level. The vehicle speed switch 16 and a start-control circuit 17 are connected to the clutch coil 6 through an AND gate 18, an OR gate 19 and a driving transistor 20 in the control circuit 21. A triangle generator 22 and a reference voltage generator 23 controlled by the output of the accelerator switch 15 are connected to inputs of a comparator 24, the output of which is connected to an OR gate 25. The vehicle speed switch 16 is connected through an inverter 27 and an AND gate 26, which is in turn connected to the other input of the OR gate 19.

The reference voltage generator 23 comprises a transistor 28 which is turned on and off in response to the level of the output of the accelerator switch 15. When the transistor 28 is turned on in response to a high level output, the reference voltage is set to zero, by discharging a capacitor 29, and, when the transistor 28 is turned off, the charging of capacitor 29 results in the voltage rising gradually to a value determined by a voltage divider comprising resistors 30 and 31.

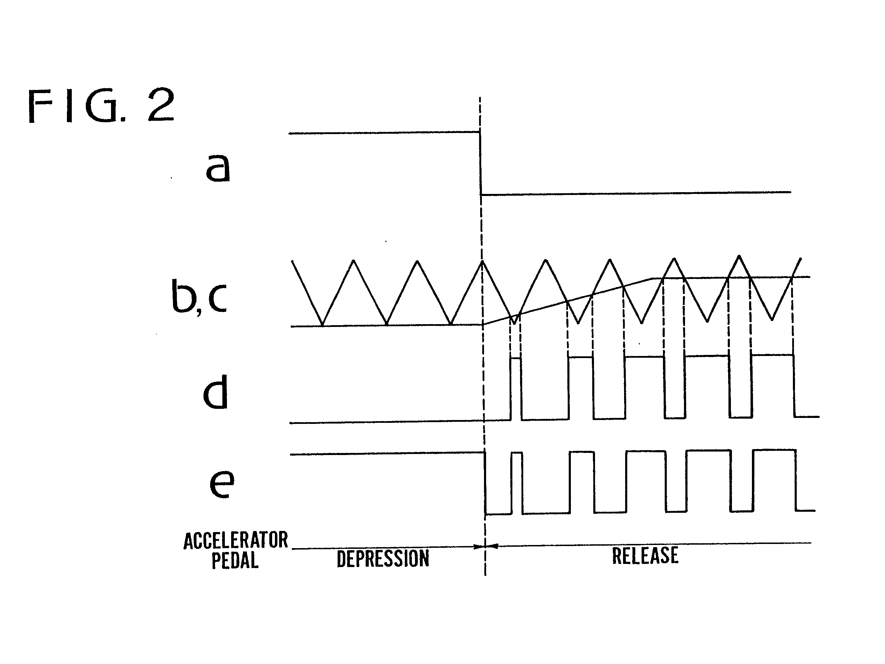

The operation of the clutch torque control system is explained hereinafter with reference to Figure 2. At the start of the vehicle, the output of the vehicle speed switch 16 is at high level. Accordingly, a signal from the start control circuit 17 is applied to the transistor 20 through the AND gate 18 and hte OR gate 19, so that the clutch current is controlled by the signal from the start control circuit so as to perform a smooth start of the vehicle with increase of the engine speed. When the vehicle speed exceeds the predetermined value, the vehicle speed switch 16 is closed, so that the output of the switch 16 changes to low level. Thus, AND gate 18 is closed to cut off the signal from the start control circuit 17. In this situation, if the accelerator pedal is being depressed, the output of the accelerator switch 15 is at high level as shown in Figure 2(a), so that the output of the OR gate 25 is, irresective of the level at the other input of the OR gate, at a high maximum level as shown in Figure 2(e). The output signal (e) is sent to the transistor 20 through AND gate 26 and OR gate 29 to maintain the transistor continuously turned on. Therefore, the clutch current is at a maximum to cause full engagement of the clutch. The value of the clutch torque is thereby set to have a high value $T_1$ as shown by $l_1$ of Figure 3, fully engaging the clutch.

When the accelerator pedal is released, the level of the output (a) from the accelerator switch 15 goes to low level as shown in Figure 2(a). Therefore, only the output of the comparator 24 is applied to the transistor 20 through Oc gate 25, AND gate 26 and OR gate 19. The comparator 24 compares a triangular wave pulse train (b) with the reference voltage (c) to produce a rectangular pusle train (d). The duty ratio of the pulse train (d) increases with the increase of the reference voltage (c) as shown in Figure 2(d). On release of the accelerator pedal, the duty ratio is very small, so that the clutch torque falls to a very small value of torque $l_2$ as shown in Figure 3, the value approximating zero. Accordingly, the clutch is almost disengaged for a moment just after releasing the accelerator pedal, whereby the abrupt change in engine torque caused by the release of the accelerator pedal is not transmitted to the transmission.

Thereafter, the clutch torque gradually increases as shown by $l_3$ in Figure 3, as the duty ratio of clutch current gradually increases. The duty ratio reaches a predetermined value and the clutch torque is held to a constant low level $T_2$. Thus, abrupt changes of the engine can be absorbed without excessive electric power consumption. The above described operation can also be carried out by a micro-computer system.

From the foregoing, it will be understood that the present invention provides a system which makes it possible to prevent the transmission of shock caused by abrupt changes in engine braking force, by lowering the clutch torque almost to zero to isolate the transmission system as the acceleration pedal is released.

## Claims

1. A system for controlling the clutch torque of an electromagnetic clutch (1) of a vehicle having an accelerator pedal, the system including an accelerator switch (15) for producing a given output signal when the accelerator pedal is released, and a first circuit (16—20) which includes a switching means (20) and which is arranged to control the clutch current passing through a coil (6) of the electromagnetic clutch, wherein the clutch current is lowered if the accelerator pedal is released; characterised in that a second circuit is responsive to the given output signal of the accelerator switch (15) for controlling the switching means (20) so as to decrease momentarily the clutch current to a low value following release of the accelerator pedal and thereafter to increase the current gradually to a predetermined value.

2. A system according to claim 1, wherein the switching means is a transistor (20) in the circuit of the clutch coil (6).

3. A system according to claim 1 or claim 2, wherein the second circuit comprises a logic gate circuit (25—27) and a pulse train generating circuit (22—254) responsive to the given output signal (a) of the accelerator switch (15) for producing a pulse train (d) controlled by the logic gate circuit (25—27), the duty ratio of the pulse train gradually varying so as to increase gradually the clutch current.

4. A system according to claim 3, wherein the pulse train generating circuit comprises a triangle generator (22) for producing a triangular wave pulse train (b), a reference voltage generator (23) the output voltage (c) of which gradually increases when the accelerator switch (15) has the given output signal, and a comparator (24) for comparing the triangular wave pulse train (b) with the reference voltage (c) and for producing a rectangular pulse train (d).

5. A system according to claim 4, wherein a vehicle speed switch 16 is arranged to produce a given output signal when the vehicle speed exceeds a predetermined value, that output signal being applied to the logic gate circuit to allow the rectangular pulse train to pass to the switch means (20).

## Patentansprüche

1. Steuerungssystem für das Kupplungsmoment einer elektromagnetischen Kupplung (1) eines mit einem Beschleunigungspedal ausgestatteten Fahrzeugs, mit einme beschleunigerschalter (15) zum Erzeugen eines gegebenen Ausgangssignals, wenn das Beschleunigungspedal freigegeben ist, und mit einem ersten Schaltkreis (16—20), der eine Schalteinrichtung (20) enthält und so angeordnet ist, daß er den durch eine Spule (6) der elektromagnetischen Kupplung fließenden Kupplungsstrom steuert, wobei sich der Kupplungsstrom bei freigegebenem Beschleunigungspedal erniedrigt; dadurch gekennzeichnet, daß ein zweiter Schaltkreis auf das gegebene Ausgangssignal des Beschleunigerschalters (15) anspricht, um die Schalteinrichtung (20) so zu steuern, daß sie den Kupplungsstrom nach einem Freigeben des Beschleunigungspedals augenblicklich auf einen niedrigenWert fallen läßt und ihn anschließend allmählich auf einen vorbestimmten Wert steigert.

2. Steuerungssystem nach Anspruch 1, dadurch gekennzeichnet, daß die Schalteinrichtung ein Transistor (20) im Schaltkreis der Kupplungsspule (6) ist.

3. Steuerungssystem nach Anspruch 1 oder 2, dadurch gekennzeichnet, daß der zwseite Schaltkreis einen logischen Gatterschaltkreis (25—27) und einen auf das gegebene Ausgangssignal (a) des Beschleunigerschalters (15) ansprechenden Schalt-kreis (22—24) zum erzeugen von Impulszügen aufweist, der vom logischen Gatterschaltkreis (25—27) gesteuert einen Impulszug (d) erzeugt, dessen Tastverhältnis sich allmählich so verändert, daß der Kupplungsstrom allmählich ansteigt.

4. Steuerungssystem nach Anspruch 3, dadurch gekennzeichnet, daß der den Impulszug erzeugende Schaltkreis einen Dreiecksgenerator (22) zum Erzeugen eines Dreieckswellen-Impulszuges (b), einen Referenzspannungsgenerator (23), dessen Ausgangsspannung (c) allmählich ansteigt, wenn der Beschleunigerschalter (15) das gegebene Ausgangssignal führt, und einen Vergleicher (24) zum Vergleichen des Dreieckswellen-Impulzsuges (b) mit der Referenzspannung (c) und zum Erzeugen eines rechteckigen Impulszuges (d) aufweist.

5. Steuerungssystem nach Anspruch 4, dadurch gekennzeichnet, daß ein Fahrzeuggeschwindigkeitsschalter (16) so angeordnet ist, daß er ein gegebenes Ausgangssignal erzeugt, wenn die Fahrzeuggeschwindigkeit einen vorbestimmten Wert übersteigt, und daß das Ausgangssignal dem logischen Gatterschaltkreis sugeführt wird, um dem rechteckigen Impulszug den Zugang zu der Schalteinrichtung (20) zu ermöglichen.

## Revendications

1. Dispositif de commande du moment de torsion de l'embrayage électromagnétqiue (1) d'un véhicule comportant une pédale d'accélérateur, ce dispositif comprenant un commutateur d'accélérateur (15) qui produit un signal de sortie donné quand on relâche la pédale d'accélérateur, et un premier circuit (16—20) qui inclut des moyens de commutation (20) et qui est conçu pour régler le courant d'embrayage circulant dans la bobine (6) de l'embrayage électromagnétqiue, l'arrangement étant tel que l'intensité du courant d'embrayage diminue lorsqu'on lève le pied de la pédale d'accélérateur, caracfrisé en ce qu'il comprend un second circuit qui, en réponse au signal de sortie donné du commutateur d'accélérateur (15) commande des moyens de commutation (20) de façon à abaisser momentanément le courant d'embrayage à une faible valeur après que la pédale d'accélétateur a été lâchée et à augmenter ensuite ce courant graduellement à une valeur prédéterminée.

2. Dispositif selon la revendication 1, caractérisé en ce que les moyens de commutation comprennent un transistor (20) monté dans la circuit de la bobine d'embrayage (6).

3. Dispositif selon la revendication 1 ou 2, caractérisé en ce que le second circuit comprend un circuit-porte logique (25—27) et un circuit générant un train d'impulsions (22—24) qui, en réponse au signal de sortie donné )a) du commutateur d'accélérateur (15), produit un train d'impulsions (d) commandé par le circuit-porte logique (25—27), le rapport d'action ou effectif de ce train d'impulsions variant progressivement de façon à augmenter progressivement le courant d'embrayage.

4. Dispositif selon la revendication 3, caractérisé en ce que le circuit générant le train d'impulsions comprend un générateur (22) qui produit un train d'impulsions triangulaires (b), un générateur de tension de référence (23) dont la tension de sortie (c) augmente graduellement quand le commutateur d'accélérateur (15) présente la tension de sortie donnée, et un comparateur (24) qui compare le train d'impulsions triangulaires (b) avec la tension de référence (c) et produit ainsi un train d'impulsions rectangulaires (d).

5. Dispositif selon la revendication 4, caractérisé en ce qu'un commutateur de vitesse de véhicule (16) est prévu pour produire un signal de srotie donné quand la vitesse du véhicule dépasse un valeur prédéterminée, ce signal de sortie étant appliqué au circuit-porte logique afin de permettre au train d'impulsions rectangulaires de gagner les moyens de commutation (20).

FIG. 1

0 147 202

TRIANGLE
GENERATOR

START–CONTROL
CIRCUIT

TRANSMISSION

FIG. 2

# FIG. 3

# FIG. 4